# EUROPÄISCHE PATENTSCHRIFT

(11) **EP 3 744 047 B1**
(45) Veröffentlichungstag und Bekanntmachung des Hinweises auf die Patenterteilung: **30.03.2022**
(21) Anmeldenummer: 18825997.2
(22) Anmeldetag: 18.12.2018
(51) Int. Cl.: H04L 12/40, H04J 3/06, H04J 3/22, H04L 7/04

(54) **TEILNEHMERSTATION FÜR EIN BUSSYSTEM UND VERFAHREN ZUM SENDEN EINER NACHRICHT MIT UNTERSCHIEDLICHEN BITRATEN IN EINEM BUSSYSTEM**
SUBSCRIBER STATION FOR A BUS SYSTEM, AND METHOD FOR TRANSMITTING A MESSAGE AT DIFFERENT BIT RATES IN A BUS SYSTEM
STATION PÉRIPHÉRIQUE POUR SYSTÈME DE BUS ET PROCÉDÉ DE TRANSMISSION D'UN MESSAGE À DIFFÉRENTS DÉBITS BINAIRES DANS UN SYSTÈME DE BUS

(30) Priorität: 22.12.2017 DE 102017223775
(43) Veröffentlichungstag der Anmeldung: 02.12.2020
(73) Patentinhaber: Robert Bosch GmbH, 70442 Stuttgart (DE)
(72) Erfinder: HARTWICH, Florian, 72762 Reutlingen (DE)
(86) Internationale Anmeldenummer: PCT/EP2018/085635
(87) Internationale Veröffentlichungsnummer: WO 2019/121769

(56) Entgegenhaltungen:
- WO-A1-2016/151353
- US-A1- 2015 339 254
- US-A1- 2016 254 926
- Florian Hartwich: "CAN with Flexible Data-Rate", Proceedings of the 13th international CAN Conference, 14. März 2012 (2012-03-14), XP055133740, Gefunden im Internet: URL:http://www.can-cia.org/fileadmin/cia/f iles/icc/13/hartwich.pdf [gefunden am 2014-08-07]

## Beschreibung

### Technisches Gebiet

Die vorliegende Erfindung betrifft eine Teilnehmerstation für ein Bussystem und ein Verfahren zum Senden einer Nachricht mit unterschiedlichen Bitraten in einem Bussystem.

### Stand der Technik

Aus der Veröffentlichung Florian Hartwich: "CAN with Flexible Data-Rate", Proceedings of the 13th international CAN Conference, 14. März 2012 (2012-03-14), XP055133740, ist eine Kommunikationssteuereinrichtung bekannt, in der zwischen einer ersten und zweiten Phase ein vorbestimmtes Bitmuster für eine Bitraten-Umschaltung zwischen einer ersten und einer zweiten Bitrate vorgesehen ist.

Die WO 2016/151353 A1 offenbart ein Verfahren zur Übertragung von Nachrichten in einem Datenbussystem, wobei die Nachrichten in Form von Datenrahmen mittels eines Datenbusses übertragbar sind und ein von einem Busteilnehmer zu sendender Datenrahmen auf eine Umschaltinformation geprüft wird.

Die US 2016/254926 A1 zeigt eine Teilnehmerstation für ein Bussystem und ein Verfahren zur Verbesserung der Empfangsqualität in dem Bussystem.

Die US 2015/339254 A1 zeigt ein Verfahren zum Austausch von Daten zwischen Teilnehmern, die mittels eines Bussystems miteinander verbunden sind. Für die Kommunikation zwischen Sensoren und Steuergeräten, beispielsweise in Fahrzeugen, wird häufig ein Bussystem eingesetzt, in welchem Daten als Nachrichten im Standard ISO11898-1:2015 als CAN Protokoll-Spezifikation mit CAN FD übertragen werden. Die Nachrichten werden zwischen den Busteilnehmern des Bussystems, wie Sensor, Steuergerät, Geber, usw., übertragen.

In einem klassischen CAN-Nachrichten-Format ist die Bitrate dadurch beschränkt, dass eine Bit-Arbitration am Anfang eines Frames bzw. einer Nachricht und das Acknowledgement am Ende eines Frames bzw. einer Nachricht nur dann möglich ist, wenn die Bitzeit deutlich mehr als doppelt so lang ist wie die Signal-Laufzeit zwischen zwei beliebigen Busteilnehmern. Bei der Arbitration wird bestimmt, welcher der Busteilnehmer als nächstes für eine vorbestimmte Zeit einen exklusiven Zugriff auf den Bus des Bussystems hat. Durch das Acknowledge wird mitgeteilt, ob ein Empfänger in dem empfangenen Frame bzw. Nachricht einen Fehler entdeckt hat oder nicht.

Um dennoch Daten mit höherer Bitrate übertragen zu können, wurde im CAN FD Nachrichten-Format eine Option zur Umschaltung auf eine höhere Bitrate innerhalb einer Nachricht geschaffen. Bei solchen Techniken wird die maximal mögliche Datenrate durch Einsatz einer höheren Taktung im Bereich der Datenfelder über einen Wert von 1 MBit/s hinaus gesteigert. Solche Nachrichten werden nachfolgend auch als CAN FD-Rahmen oder CAN FD-Nachrichten bezeichnet. Bei CAN FD ist die Nutzdatenlänge von 8 auf bis zu 64 Bytes erweitert und sind die Datenübertragungsraten deutlich höher als bei CAN.

Die Umschaltung innerhalb einer Nachricht im FD Frame Format bzw. FD Nachrichten-Format auf eine höhere Bitrate und zurück erfolgt zwischen dem Ende der Arbitration und vor dem Acknowledge, wie in dem genannten CAN Protokoll (ISO 11898-1:2015) definiert. In diesem Bereich wird die untere Grenze für die Bitzeit nicht mehr von den Signallaufzeiten bestimmt, aber die Bitzeit muss noch ausreichende Reserven bieten für eventuelle Asymmetrien in der analogen Signalübertragung sowie für durch Takt-Toleranzen verursachte Phasen-Verschiebungen zwischen den Busteilnehmern.

Diese Phasen-Verschiebungen werden im CAN-Frame durch regelmäßige Synchronisationen an Flanken vom rezessiven zum dominanten Bus-Pegel ausgeglichen. Hierbei wird zwischen einer Hard-Synchronisation und einer Re-Synchronisation unterschieden.

Im klassischen CAN Frame erfolgt die Hard-Synchronisation nur einmal am Anfang des Frames bzw. der Nachricht. Hierbei wird ein möglicher Phasen-Fehler bis auf einen Rest von maximal einem Time-Quantum ausgeglichen. Das Time-Quantum ist die Zeiteinheit des CAN-Protokolls. Bei der Re-Synchronisation bleibt ein Rest-Fehler übrig, wenn der Phasen-Fehler größer als die konfigurierte Synchronisations-Sprungweite SJW war. Die Synchronisations-Sprungweite muss daher mindestens so groß sein wie der zwischen zwei Synchronisationen akkumulierte Phasen-Fehler werden kann. Bei einer Takt-Toleranz von df ist der maximale Takt-Unterschied zwischen Sender und Empfänger 2 * df. Das bedeutet, der Phasen-Fehler zwischen den beiden Busteilnehmern kann sich in 10 Bitzeiten (dem maximalen Abstand zwischen zwei Re-Synchronisationen) bei z.B. df = 1% auf 20% einer Bitzeit akkumulieren.

Die Umstellung von der langsamen auf die schnellere Bitrate in der CAN FD Nachricht erfolgt zweistufig. Während der Arbitration gelten andere Synchronisations-Regeln, so dass ein Busteilnehmer, der die Arbitration erst bei den letzten Bits des Identifzierers bzw. Identifiers verliert, eventuell nicht ausreichend auf den übrig bleibenden Sender synchronisiert ist.

Daher synchronisieren sich alle Empfänger auf den Sender der Nachricht mittels einer Hard-Synchronisation an der Flanke vom rezessiven FDF Bit der CAN FD Nachricht zum folgenden dominanten Reserved Bit der CAN FD Nachricht. Danach kommt das BRS Bit, dessen Pegel entscheidet, ob die Bitrate umgeschaltet wird. Der Umschaltzeitpunkt liegt am Abtast-Punkt oder Sample-Point dieses Bits.

Das beschriebene Verfahren erfordert, dass die Takte und Konfigurations-Einstellungen aller Busteilnehmer so weit aufeinander abgestimmt sind, dass der Abtast-Punkt aller Busteilnehmer an der gleichen Position innerhalb der Bitzeit liegt. Die Hard-Synchronisation am Ende des FDF Bits beschränkt die Abweichungen des Umschaltzeitpunktes zwischen den Busteilnehmern auf den Rest-Fehler nach der Hard-Synchronisation. Im Verhältnis zur Bitzeit wird dieser Phasen-Fehler nach Umstellung auf die höhere Bitrate mit der dann kürzeren Bitzeit gravierender. Die erste Re-Synchronisation nach der Umschaltung erfolgt beim ESI Bit oder beim Data Length Code, je nach gesendeten Werten. Eine abweichende Einstellung der Abtast-Punkt-Position bei einem Busteilnehmer würde den Phasen-Fehler am Umschaltzeitpunkt vergrößern und weniger Reserven zum Ausgleich von Takttoleranzen übrig lassen.

Bei der Umschaltung von der schnelleren Bitrate zurück zu der langsameren Bitrate wird der weitergegebene Phasen-Fehler im Verhältnis zur dann längeren Bitzeit weniger bedeutend. Daher ist diese Umstellung robuster als die Umschaltung von der langsameren Bitrate zu der schnelleren Bitrate.

### Offenbarung der Erfindung

Daher ist es Aufgabe der vorliegenden Erfindung, eine Teilnehmerstation für ein Bussystem und ein Verfahren zum Senden einer Nachricht mit unterschiedlichen Bitraten in einem Bussystem bereitzustellen, welche die zuvor genannten Probleme lösen. Insbesondere sollen eine Teilnehmerstation für ein Bussystem und ein Verfahren zum Senden einer Nachricht mit unterschiedlichen Bitraten in einem Bussystem bereitgestellt werden, bei welchen eine größere Robustheit der Bitratenumschaltung und eine Steigerung der Bitrate im Datenfeld realisiert werden kann.

Die Aufgabe wird durch eine Teilnehmerstation für ein Bussystem mit den Merkmalen des Anspruchs 1 gelöst. Die Teilnehmerstation umfasst eine Kommunikationssteuereinrichtung zum Erstellen einer Nachricht für mindestens eine weitere Teilnehmerstation des Bussystems, bei welchem zumindest zeitweise ein exklusiver, kollisionsfreier Zugriff einer Teilnehmerstation auf eine Busleitung des Bussystems gewährleistet ist, wobei die Kommunikationssteuereinrichtung ausgestaltet ist, in der Nachricht eine erste Phase vorzusehen, die mit einer ersten Bitrate zu senden ist, und eine zweite Phase vorzusehen, die mit einer zweiten Bitrate zu senden ist, die schneller oder langsamer als die erste Bitrate ist, wobei die Kommunikationssteuereinrichtung ausgestaltet ist, in der Nachricht zwischen der ersten und zweiten Phase ein vorbestimmtes Bitmuster für eine Bitraten-Umschaltung zwischen der ersten und zweiten Bitrate vorzusehen, und wobei das vorbestimmte Bitmuster sowohl vor als auch nach der Bitraten-Umschaltung eine Flanke zur Synchronisation aufweist, mit Hilfe welcher sich die mindestens eine weitere Teilnehmerstation als Empfänger auf die Teilnehmerstation als Sender synchronisieren kann.

Die Kommunikationssteuereinrichtung der Teilnehmerstation kann auch dazu ausgestaltet sein, dass sich die Teilnehmerstation als Empfänger einer Nachricht auf die sendende Teilnehmerstation synchronisiert, wenn die empfangene Nachricht zwischen der ersten und zweiten Phase ein vorbestimmtes Bitmuster für eine Bitraten-Umschaltung zwischen der ersten und zweiten Bitrate enthält, wobei das vorbestimmte Bitmuster sowohl vor als auch nach der Bitraten-Umschaltung eine Flanke zur Synchronisation aufweist.

Mit der Teilnehmerstation ist eine Bitraten-Umschaltung möglich, bei welcher vor und hinter dem Umschaltzeitpunkt eine Synchronisierung stattfindet. Mit den verwendeten festen Bitmustern an den Umschaltzeitpunkten ist in einem Bussystem eine bessere Synchronisation der Teilnehmerstation mit anderen Busteilnehmern durchführbar, bevor die variablen Nutzdaten gesendet werden.

Die Synchronisation funktioniert insbesondere gut, wenn an beiden Synchronisations-Flanken eine Hard-Synchronisation erfolgt, so wie beispielsweise in der oben genannten Spezifikation zum CAN FD-Protokoll spezifiziert für die Flanke von FDF zum reserved Bit.

Durch die mehrfache Synchronisierung, vor und hinter dem Umschaltzeitpunkt, sind größere Takt-Toleranzen und mehr Freiheiten bei den Konfigurations-Einstellungen erlaubt.

Noch dazu bietet das von der Teilnehmerstation durchgeführte Verfahren eine größere Robustheit der Bitratenumschaltung und eine Steigerung der Bitrate im Datenfeld.

Das von der Teilnehmerstation durchgeführte Verfahren kann nachträglich in das CAN FD Protokoll eingefügt werden. Beispielsweise ist das Einfügen auch als Option möglich, die wahlweise eingebaut wird.

Vorteilhafte weitere Ausgestaltungen der Teilnehmerstation sind in den abhängigen Ansprüchen angegeben.

Gemäß einer speziellen Ausführungsvariante ist zumindest die Flanke nach der Bitraten-Umschaltung eine Flanke zur Hard-Synchronisation.

Gemäß einer weiteren speziellen Ausführungsvariante ist die Flanke vor und nach der Bitratenumschaltung eine Flanke zur Re-Synchronisation.

Bei einem Ausführungsbeispiel können die Flanken zur Synchronisation Flanken von rezessiv nach dominant sein, so dass das vorbestimmte Bitmuster 1010 ist, wenn rezessiv = 1 ist und dominant = 0 ist.

Gemäß einem weiteren Ausführungsbeispiel kann die Kommunikationssteuereinrichtung ausgestaltet sein, in der Nachricht ein Umschaltbit U vorzusehen, dessen Wert entscheidet, ob die erste Bitrate auf die zweite Bitrate umzuschalten ist, wobei die zweite Bitrate schneller als die erste Bitrate ist. Hierbei kann das vorbestimmte Bitmuster 10U10 sein, wenn rezessiv = 1 ist und dominant = 0 ist. Alternativ kann die Kommunikationssteuereinrichtung ausgestaltet sein, das Umschaltbit U auf rezessiv oder 1 zu setzen, um zu signalisieren, dass in der Nachricht von der ersten Bitrate auf die zweite Bitrate umzuschalten ist, und das vorbestimmte Bitmuster als 10U0 zu setzen, wenn rezessiv = 1 ist und dominant = 0 ist.

Denkbar ist, dass die Nachricht eine CAN FD-Nachricht ist, bei welcher das vorbestimmte Bitmuster eine Umschaltung der ersten Bitrate nach einer Arbitrationsphase auf eine schnellere zweite Bitrate in der Datenphase beinhaltet, in welcher Nutzdaten der Nachricht umfasst sind, und/oder bei welcher das vorbestimmte Bitmuster eine Umschaltung der zweiten Bitrate nach einem Acknowledgement auf die langsamere erste Bitrate für die Arbitrationsphase beinhaltet.

Möglicherweise weist das vorbestimmte Bitmuster das BRS-Bit einer CAN FD-Nachricht als Umschaltbit zwischen der ersten und zweiten Bitrate auf.

Die zuvor beschriebene Teilnehmerstation kann zudem eine Sende-/Empfangseinrichtung aufweisen zur Synchronisation auf eine Flanke in dem vorbestimmten Bitmuster einer Nachricht am Ende oder Anfang einer Arbitrationsphase. Hierbei ist die Sende-/Empfangseinrichtung möglicherweise ausgestaltet, die Daten mit der zweiten Bitrate mit einem anderen Bus-Pegel auf die Busleitung zu senden als die Daten mit der ersten Bitrate.

Die zuvor beschriebene Teilnehmerstation kann Teil eines Bussystems sein, das zudem eine parallele Busleitung und mindestens zwei Teilnehmerstationen umfasst, welche über die Busleitung derart miteinander verbunden sind, dass sie miteinander kommunizieren können. Hierbei ist mindestens eine der mindestens zwei Teilnehmerstationen eine zuvor beschriebene Teilnehmerstation.

Die zuvor genannte Aufgabe wird zudem durch ein Verfahren zum Senden einer Nachricht mit unterschiedlichen Bitraten in einem Bussystem nach Anspruch 13 gelöst. Das Verfahren hat den Schritt: Erstellen, mit einer Kommunikationssteuereinrichtung einer Teilnehmerstation des Bussystems, einer Nachricht für mindestens eine weitere Teilnehmerstation des Bussystems, bei welchem zumindest zeitweise ein exklusiver, kollisionsfreier Zugriff einer Teilnehmerstation auf eine Busleitung des Bussystems gewährleistet ist, wobei die Kommunikationssteuereinrichtung in der Nachricht eine erste Phase vorsieht, die mit einer ersten Bitrate zu senden ist, und eine zweite Phase vorsieht, die mit einer zweiten Bitrate zu senden ist, die schneller oder langsamer als die erste Bitrate ist, wobei die Kommunikationssteuereinrichtung in der Nachricht zwischen der ersten und zweiten Phase ein vorbestimmtes Bitmuster für eine Bitraten-Umschaltung zwischen der ersten und zweiten Bitrate vorsieht, und wobei das vorbestimmte Bitmuster sowohl vor als auch nach der Bitraten-Umschaltung eine Flanke zur Synchronisation aufweist, mit Hilfe welcher sich die mindestens eine weitere Teilnehmerstation als Empfänger auf die Teilnehmerstation als Sender synchronisieren kann.

Das Verfahren bietet dieselben Vorteile, wie sie zuvor in Bezug auf die Teilnehmerstation genannt sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

### Zeichnungen

Nachfolgend ist die Erfindung unter Bezugnahme auf die beiliegende Zeichnung und anhand von Ausführungsbeispielen näher beschrieben. Es zeigen:
Fig. 1 ein vereinfachtes Blockschaltbild eines Bussystems gemäß einem ersten Ausführungsbeispiel;
Fig. 2 ein Schaubild zur Veranschaulichung des Aufbaus von Nachrichten, die von Teilnehmerstationen des Bussystems gemäß dem ersten Ausführungsbeispiel gesendet werden können;
Fig. 3 eine Darstellung eines Beispiels für einen zeitlichen Verlauf einer Differenzspannung VDIFF der Bussignale CAN_H und CAN_L für einen Teil einer Nachricht bei einer Sende-/Empfangseinrichtung des Bussystems gemäß dem ersten Ausführungsbeispiel;
Fig. 4 eine Darstellung eines Beispiels für einen zeitlichen Verlauf einer Differenzspannung VDIFF der Bussignale CAN_H und CAN_L für einen Teil einer Nachricht bei einer Sende-/Empfangseinrichtung eines Bussystems gemäß einem zweiten Ausführungsbeispiel; und
Fig. 5 eine Darstellung eines Beispiels für einen zeitlichen Verlauf einer Differenzspannung VDIFF der Bussignale CAN_H und CAN_L für einen Teil einer Nachricht bei einer Sende-/Empfangseinrichtung eines Bussystems Bussystem gemäß einem dritten Ausführungsbeispiel.

In den Figuren sind gleiche oder funktionsgleiche Elemente, sofern nichts anderes angegeben ist, mit denselben Bezugszeichen versehen.

### Beschreibung der Ausführungsbeispiele

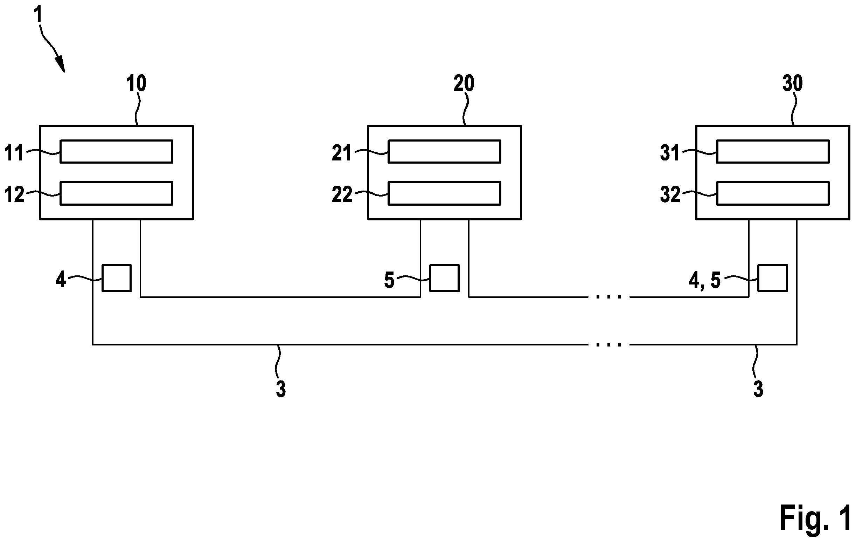

Fig. 1 zeigt als Beispiel ein Bussystem 1, das insbesondere für ein CAN-Bussystem, ein CAN FD-Bussystem, usw., ausgestaltet ist. Das Bussystem 1 kann in einem Fahrzeug, insbesondere einem Kraftfahrzeug, einem Flugzeug, usw., oder im Krankenhaus usw. Verwendung finden.

In Fig. 1 hat das Bussystem 1 eine, insbesondere parallele, Busleitung 3, an die eine Vielzahl von Teilnehmerstationen 10, 20, 30 angeschlossen sind. Über die Busleitung 3 sind Nachrichten 4, 5 in der Form von Signalen zwischen den einzelnen Teilnehmerstationen 10, 20, 30 seriell übertragbar. Die Teilnehmerstationen 10, 20, 30 sind beispielsweise Steuergeräte, Sensoren, Anzeigevorrichtungen, usw. eines Kraftfahrzeugs.

Wie in Fig. 1 gezeigt, hat die Teilnehmerstation 10 eine Kommunikationssteuereinrichtung 11 und eine Sende-/Empfangseinrichtung 12. Die Teilnehmerstation 20 hat dagegen eine Kommunikationssteuereinrichtung 21 und eine Sende-/Empfangseinrichtung 22. Die Teilnehmerstation 30 hat eine Kommunikationssteuereinrichtung 31 und eine Sende-/Empfangseinrichtung 32. Die Sende-/Empfangseinrichtungen 12, 22, 32 der Teilnehmerstationen 10, 20, 30 sind jeweils direkt an die Busleitung 3 angeschlossen, auch wenn dies in Fig. 1 nicht veranschaulicht ist.

Die Kommunikationssteuereinrichtungen 11, 21, 31 dienen jeweils zur Steuerung einer Kommunikation der jeweiligen Teilnehmerstation 10, 20, 30 über die Busleitung 3 mit einer anderen Teilnehmerstation der Teilnehmerstationen 10, 20, 30, die an die Busleitung 3 angeschlossen sind.

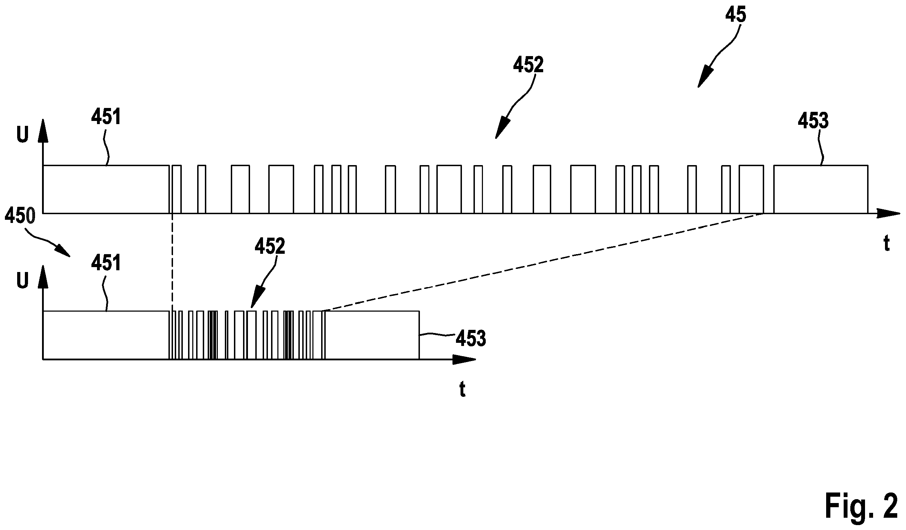

Die Kommunikationssteuereinrichtung 11 kann wie ein herkömmlicher CAN-Controller ausgeführt sein. Die Kommunikationssteuereinrichtung 11 erstellt und liest erste Nachrichten 4, beispielsweise Classic CAN-Nachrichten 4. Die Classic CAN-Nachrichten 4 sind gemäß dem Classic Basisformat aufgebaut, bei welcher in der Nachricht 4 eine Anzahl von bis zu 8 Datenbytes umfasst sein können, wie im oberen Teil von Fig. 2 gezeigt.

Die Kommunikationssteuereinrichtung 21 in Fig. 1 kann bis auf die nachfolgend noch genauer beschriebenen Unterschiede wie ein herkömmlicher CAN FD-Controller ausgeführt sein. Die Kommunikationssteuereinrichtung 21 erstellt und liest zweite Nachrichten 5, die beispielsweise modifizierte CAN FD-Nachrichten 5 sind. Hierbei sind die modifizierten CAN FD-Nachrichten 5 auf der Grundlage eines CAN FD-Formats aufgebaut, bei welcher in der Nachricht 5 eine Anzahl von bis zu beispielsweise 64 Datenbytes umfasst sein können, wie im unteren Teil von Fig. 2 gezeigt.

Die Kommunikationssteuereinrichtung 31 kann ausgeführt sein, um je nach Bedarf eine Classic CAN-Nachricht 4 oder eine modifizierte CAN FD-Nachricht 5 für die Sende-/Empfangseinrichtung 32 bereitzustellen oder von dieser zu empfangen. Die Kommunikationssteuereinrichtung 21 erstellt und liest also eine erste Nachricht 4 oder zweite Nachricht 5, wobei sich die erste und zweite Nachricht 4, 5 durch ihren Datenübertragungsstandard unterscheiden, nämlich in diesem Fall CAN oder modifiziertes CAN FD.

Die Sende-/Empfangseinrichtung 12 kann wie ein herkömmlicher CAN Transceiver ausgeführt sein. Die Sende-/Empfangseinrichtung 22 kann bis auf die nachfolgend noch genauer beschriebenen Unterschiede wie ein herkömmlicher CAN FD-Transceiver ausgeführt sein. Die Sende-/Empfangseinrichtung 32 kann ausgeführt sein, um je nach Bedarf Nachrichten 4 gemäß dem derzeitigen CAN-Basisformat oder Nachrichten 5 gemäß dem modifizierten CAN FD-Format für die Kommunikationssteuereinrichtung 31 bereitzustellen oder von dieser zu empfangen.

Mit den beiden Teilnehmerstationen 20, 30 kann eine Bildung und dann Übertragung von Nachrichten 5 mit dem modifizierten CAN FD oder auch mit höheren Datenraten als CAN FD realisiert werden.

Fig. 2 zeigt in ihrem oberen Teil für die Nachricht 4 einen CAN-Rahmen 45, wie er von der Sende-/Empfangseinrichtung 12 oder der Sende-/Empfangseinrichtung 13 gesendet wird, und in ihrem unteren Teil für die Nachricht 5 einen CAN-FD-Rahmen 450, wie er von der Sende-/Empfangseinrichtung 22 oder 32 gesendet werden kann. Der CAN-Rahmen 45 und der CAN-FD-Rahmen 450 sind für die CAN-Kommunikation auf dem Bus 40 grundlegend in zwei unterschiedliche Phasen oder Bereiche unterteilt, nämlich die Arbitrationsphasen 451, 453 und einen Datenbereich 452, der bei Classical CAN auch Datenfeld bzw. bei CAN-FD auch Datenphase 452 genannt wird. In der Datenphase 452 sind die Nutzdaten des CAN-FD-Rahmens bzw. der Nachricht 5 enthalten.

Gemäß Fig. 2 wird bei CAN-FD im Vergleich zum klassischen CAN am Ende der Arbitrationsphase 451 die Bitrate für die folgende Datenphase 452 auf beispielsweise 2, 4, 8Mbps erhöht. Damit gilt, dass bei CAN-FD die Bitrate in den Arbitrationsphasen 451, 453 kleiner als die Bitrate in der Datenphase 452 ist. Bei CAN-FD ist die Datenphase 452 gegenüber der Datenphase 452 des CAN-Rahmens zeitlich deutlich verkürzt.

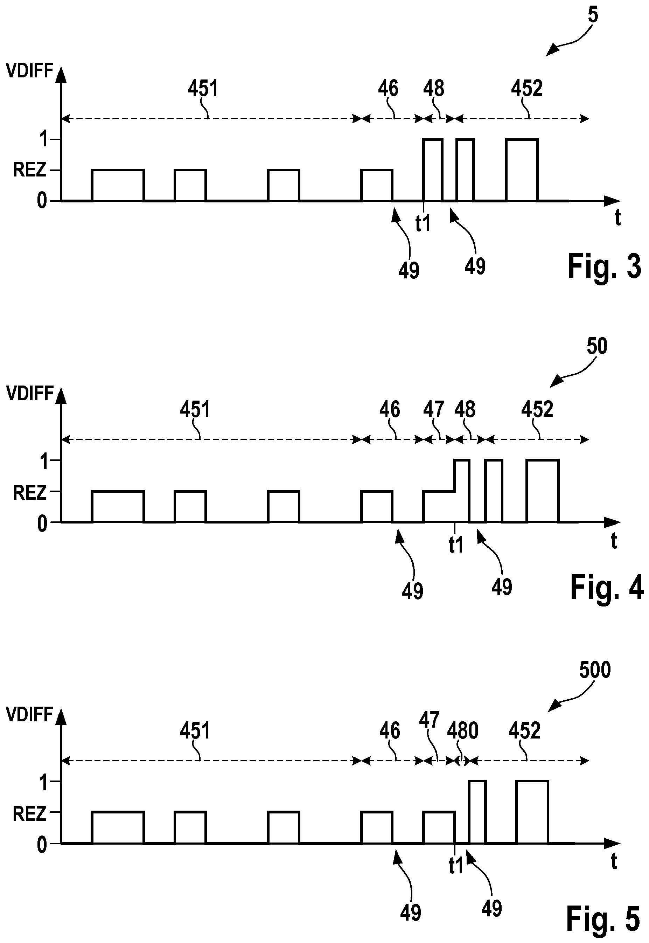

Fig. 3 zeigt den Übergang zwischen der Arbitrationsphase 451 und der Datenphase 452 für die Nachricht 5 anhand der Differenzspannung VDIFF für die differentiellen Signale CAN_H und CAN_L über der Zeit t genauer. Bei dem Übergang findet ein Umschalten zwischen einer ersten und zweiten Bitrate statt. Hierbei ist ein vorbestimmtes Bitmuster mit den Bitfolgen 46, 48 zwischen der Arbitrationsphase 451 und der Datenphase 452 vorgesehen.

Gemäß Fig. 3 wird in der Arbitrationsphase 451 eine langsamere Bitrate verwendet, die nachfolgend auch als die erste Bitrate bezeichnet ist. Hierbei ist der Pegel der logischen '0' dominant und kann den rezessiven Pegel überschreiben, mit dem die logische '1' übertragen wird. Es gibt in dem synchronisierenden Bitmuster 46, 48 eine erste Synchronisationsflanke 49 in einer Bitfolge 46 unmittelbar vor der Bitraten-Umschaltung zu einem Umschaltzeitpunkt t1. Unmittelbar nach der Umschaltung kommt eine zweite Synchronisationsflanke 49 in einer Bitfolge 48. Hier können optional außer der Bitrate auch die Bus-Pegel der Differenzspannung VDIFF von einem ersten Pegel "REZ" auf einen zweiten Pegel "1" umgeschaltet werden, zum Beispiel um bei der höheren Bitrate symmetrischere Bitlängen zu ermöglichen. Die höhere bzw. schnellere Bitrate ist nachfolgend auch als zweite Bitrate bezeichnet. Die Umschaltung der Bus-Pegel kann je nach Bedarf auf andere Weise erfolgen als in dem CAN-Protokoll spezifiziert.

Von den Flanken 49 vor und nach der Bitratenumschaltung kann mindestens eine der Flanken zur Hard-Synchronisation verwendet werden. Möglich ist jedoch, dass beide Flanken 49 zur Re-Synchronisation verwendet werden.

Die Bitfolge 46 und die Bitfolge 48 bilden einen Teil eines Rahmen-Formats, in dem die Bitraten-Umschaltung innerhalb des festen oder vorbestimmten Bitmusters 46, 48 erfolgt, das unmittelbar vor und nach der Umschaltung zu dem Umschaltzeitpunkt t1 je eine Flanke 49 zur Synchronisation enthält. Bei dem Beispiel von Fig. 3 ist das vorbestimmte Bitmuster "1010". Dadurch synchronisieren sich die einzelnen Teilnehmerstationen 20, 30 auf die Flanken von rezessiv ('1') nach dominant ('0'). Das vorbestimmte Bitmuster 46, 48 von Fig. 3 ist das einfachste Bitmuster, das zwei Synchronisationen nacheinander bei einem Übergang zwischen der ersten und der zweiten Bitrate von beispielsweise der Arbitrationsphase 451 und der Datenphase 452 ermöglicht.

Wie in Fig. 3 gezeigt, wird bei der ersten 1→0 Flanke noch die Konfiguration für die niedrige Bitrate verwendet, bei der zweiten 1→0 Flanke wird jedoch bereits die Konfiguration für die hohe Bitrate verwendet.

Ohne Bitraten-Umschaltung ist die zweite Synchronisation nicht erforderlich.

Das gleiche vorbestimmte Bitmuster 46, 48 mit den Bitfolgen 46 und 48 kann auch verwendet werden, um am Ende der Nachricht 5 besser synchronisiert auf die langsamere Bitrate zurückzuschalten, zum Beispiel vor einem möglichen Acknowledgement anderer Busteilnehmer 20, 30 in einem CAN FD Rahmen 450, also am Ende der Datenphase 452. Durch das Acknowledgement wird mitgeteilt, ob ein Empfänger in dem empfangenen Frame bzw. Nachricht 5 einen Fehler entdeckt hat oder nicht.

Das synchronisierende Bitmuster 46, 48 ist besonders dann hilfreich, wenn außer der Bitrate auch der sogenannte "Physical Layer" umgeschaltet wird, wenn also für die Übertragung der höheren Bitrate ein anderer Bus-Pegel als für die Übertragung der niedrigeren Bitrate verwendet werden, wie in Fig. 3 veranschaulicht.

Fig. 4 zeigt in Bezug auf ein zweites Ausführungsbeispiel den Übergang zwischen der Arbitrationsphase 451 und der Datenphase 452 für eine Nachricht 50. Auch hier ist wieder die Differenzspannung VDIFF für die differentiellen Signale CAN_H und CAN_L über der Zeit t für einen Teil der Nachricht 50 gezeigt, in welchem eine Umschaltung der Bitrate erfolgt, wie bereits in Bezug auf Fig. 3 zuvor beschrieben.

Im Unterschied zu dem vorbestimmten Bitmuster 46, 48 mit den Bitfolgen 46 und 48 von Fig. 3 ist bei der Nachricht 50 ein vorbestimmtes Bitmuster 46, 47, 48 mit den Bitfolgen 46 und 47 und 48 zwischen der Arbitrationsphase 451 und der Datenphase 452 vorgesehen.

Die Bitfolge 47 entspricht einem Umschaltbit U, dessen Wert entscheidet, ob die Bitrate umgeschaltet werden soll oder nicht. Somit ergibt sich bei dem Beispiel von Fig. 4 das vorbestimmte Bitmuster "10U10" als Bitfolge 46, 47, 48.

Das Umschalt-Bit 'U' entspricht bei einem CAN FD Rahmen dem BRS-Bit in dem CAN FD Nachrichten-Format. Hierbei kann genutzt werden, dass das CAN FD Protokoll gemäß der ISO 11898-1:2015 die Option enthält, den CAN FD Controller in einen Protokollausnahmezustand bzw. "Protocol Exception State" zu schalten, wenn das auf das FDF-Bit folgende "Reserved Bit" rezessiv gesehen wird und nicht, wie erwartet, dominant. Diese Option soll es erlauben, ein neues Frame-Format bzw. Nachrichten-Format einzuführen, dass von "alten" bzw. bereits vorhandenen CAN FD Controllern, die dieses Format noch nicht kennen, nicht mit Fehlerrahmen (Error-Frames) zerstört wird.

Eine Ausführungsvariante nutzt, dass das ESI-Bit im CAN FD-Frame bzw. der Nachricht 5 derzeit meist dominant ist. Daher liefert das Bitmuster FDF-res-BRS-ESI als "1010" in dem CAN FD-Frame bzw. der Nachricht 5 zwei gute Synchronisationsflanken 49. Für den Fall, dass das ESI-Bit rezessiv ist, ergibt sich zusammen mit einem DLC="1111" ein Bit-Muster von "1011111o", wobei "o" ein dominantes Stuff-Bit ist. Hier kommt die zweite Synchronisationsflanke 49 spät.

Für den Fall, dass das "res"-Bit oder "Reserved Bit" rezessiv gewählt ist und zwei dominante Synchronisationsbits eingefügt sind, kommt man auf das Bit-Muster FDF-res-sync-BRS-sync-(ESI=?) = "11010?", wobei "?" ein Platzhalter für einen frei wählbaren Bitzustand ist.

Auch wenn die genannten Varianten sehr vorteilhaft sind, sind selbstverständlich andere Ausführungsvarianten möglich.

Wie auch bei dem Beispiel von Fig. 3, kann das gleiche vorbestimmte Bitmuster 46, 47, 48 mit den Bitfolgen 46 und 47 und 48 auch verwendet werden, um am Ende der Nachricht 50 besser synchronisiert auf die langsamere Bitrate zurückzuschalten, zum Beispiel vor einem möglichen Acknowledgement anderer Busteilnehmer. In diesem Fall ist ein Umschalt-Bit 'U' überflüssig.

Zusätzlich oder alternativ kann das synchronisierende Bitmuster im Format der Nachricht 5 in den Nachrichten 5 ausgelassen werden, in denen am ersten Bitraten-Umschalt-Bitmuster durch das Umschalt-Bit 'U' entschieden worden ist, dass in dieser Nachricht 5 die Bitrate nicht umgeschaltet worden ist.

Ansonsten gilt das Gleiche, wie zuvor im Zusammenhang mit Fig. 3 beschrieben.

Fig. 5 zeigt in Bezug auf ein drittes Ausführungsbeispiel den Übergang zwischen der Arbitrationsphase 451 und der Datenphase 452 für eine Nachricht 500. Wie bereits in Bezug auf Fig. 4 zuvor beschrieben, ist auch hier wieder die Differenzspannung VDIFF für die differentiellen Signale CAN_H und CAN_L über der Zeit t für einen Teil der Nachricht 500 gezeigt, in welchem eine Umschaltung der Bitrate erfolgt.

Bei der Nachricht 500 ist beispielsweise festgelegt, dass der Wert '1' für das Umschalt-Bit U des zweiten Ausführungsbeispiels bedeutet, dass die Bitrate umzuschalten ist. Daher ist das vorbestimmte Bitmuster 46, 47, 48, das in Fig. 4 für die Bitfolge 46 und 47 und 48 den Wert "10U10" hat, bei der Nachricht 500 verkürzt in das Bitmuster 46, 47, 480 und damit zu "10U0".

Insgesamt kann mit den zuvor beschriebenen Ausführungsbeispielen eine sehr große Takt-Toleranz und Freiheit bei den Konfigurations-Einstellungen für das Bussystem 1 erzielt werden.

Alle zuvor beschriebenen Ausgestaltungen des Bussystems 1, der Teilnehmerstationen 10, 20, 30 und des von diesen ausgeführten Verfahrens können einzeln oder in allen möglichen Kombinationen Verwendung finden. Insbesondere können alle Merkmale der zuvor beschriebenen Ausführungsbeispiele und/oder deren Modifikationen beliebig kombiniert werden. Zusätzlich oder alternativ sind insbesondere folgende Modifikationen denkbar.

Das zuvor beschriebene Bussystem 1 gemäß den Ausführungsbeispielen ist anhand eines auf dem CAN-Protokoll basierenden Bussystem beschrieben. Das Bussystem 1 gemäß den Ausführungsbeispielen kann jedoch auch eine andere Art von Kommunikationsnetz sein. Es ist vorteilhaft, jedoch nicht zwangsläufige Voraussetzung, dass bei dem Bussystem 1 zumindest für bestimmte Zeitspannen ein exklusiver, kollisionsfreier Zugriff einer Teilnehmerstation 10, 20, 30 auf einen gemeinsamen Kanal gewährleistet ist.

Die Anzahl und Anordnung der Teilnehmerstationen 10, 20, 30 in dem Bussystem 1 der Ausführungsbeispiele ist beliebig. Insbesondere kann die Teilnehmerstation 10 in dem Bussystem 1 entfallen. Es ist möglich, dass eine oder mehrere der Teilnehmerstationen 20 oder 30 in dem Bussystem 1 vorhanden sind.

## Patentansprüche

1. Teilnehmerstation (20; 30) für ein Bussystem (1), mit einer Kommunikationssteuereinrichtung (21; 31) zum Erstellen einer Nachricht (4; 5; 50; 500) für mindestens eine weitere Teilnehmerstation (20; 30) des Bussystems (1), bei welchem zumindest zeitweise ein exklusiver, kollisionsfreier Zugriff einer Teilnehmerstation (10, 20, 30) auf eine Busleitung (3) des Bussystems (1) gewährleistet ist,
wobei die Kommunikationssteuereinrichtung (21; 31) ausgestaltet ist, in der Nachricht (4; 5; 50; 500) eine erste Phase (451; 452) vorzusehen, die mit einer ersten Bitrate zu senden ist, und eine zweite Phase (452; 453) vorzusehen, die mit einer zweiten Bitrate zu senden ist, die schneller oder langsamer als die erste Bitrate ist,
wobei die Kommunikationssteuereinrichtung (21; 31) ausgestaltet ist, in der Nachricht (5; 50; 500) zwischen der ersten und zweiten Phase (451, 452; 452, 453) ein vorbestimmtes Bitmuster (46, 47; 46, 47, 48; 46, 47, 480) für eine Bitraten-Umschaltung zwischen der ersten und zweiten Bitrate vorzusehen, **dadurch gekennzeichnet, dass** das vorbestimmte Bitmuster (46, 47; 46, 47, 48; 46, 47, 480) sowohl vor als auch nach der Bitraten-Umschaltung eine Flanke (49) zur Synchronisation aufweist, mit Hilfe welcher sich die mindestens eine weitere Teilnehmerstation (20; 30) als Empfänger auf die Teilnehmerstation (20; 30) als Sender synchronisieren kann.

2. Teilnehmerstation (20; 30) nach Anspruch 1, wobei sich die Teilnehmerstation als Empfänger einer Nachricht auf die sendende Teilnehmerstation synchronisiert, wenn die empfangene Nachricht zwischen der ersten und zweiten Phase ein vorbestimmtes Bitmuster für eine Bitraten-Umschaltung zwischen der ersten und zweiten Bitrate enthält, wobei das vorbestimmte Bitmuster sowohl vor als auch nach der Bitraten-Umschaltung eine Flanke zur Synchronisation aufweist.

3. Teilnehmerstation (20; 30) nach Anspruch 1 oder 2, wobei zumindest die Flanke (49) nach der Bitraten-Umschaltung eine Flanke zur Hard-Synchronisation ist.

4. Teilnehmerstation (20; 30) nach einem der vorangehenden Ansprüche, wobei die Flanken (49) zur Synchronisation Flanken von rezessiv nach dominant sind, so dass das vorbestimmte Bitmuster (46, 47) 1010 ist, wenn rezessiv = 1 ist und dominant = 0 ist.

5. Teilnehmerstation (20; 30) nach einem der vorangehenden Ansprüche, wobei die Kommunikationssteuereinrichtung (21; 31) ausgestaltet ist, in der Nachricht (50; 500) ein Umschaltbit U vorzusehen, dessen Wert entscheidet, ob die erste Bitrate auf die zweite Bitrate umzuschalten ist, und wobei die zweite Bitrate schneller als die erste Bitrate ist.

6. Teilnehmerstation (20; 30) nach Anspruch 5, wobei das vorbestimmte Bitmuster (46, 47, 48) 10U10 ist, wenn rezessiv = 1 ist und dominant = 0 ist.

7. Teilnehmerstation (20; 30) nach Anspruch 5, wobei die Kommunikationssteuereinrichtung (21; 31) ausgestaltet ist, das Umschaltbit U auf rezessiv oder 1 zu setzen, um zu signalisieren, dass in der Nachricht (50; 500) von der ersten Bitrate auf die zweite Bitrate umzuschalten ist, und das vorbestimmte Bitmuster (46, 47, 480) als 10U0 zu setzen, wenn rezessiv = 1 ist und dominant = 0 ist.

8. Teilnehmerstation (20; 30) nach einem der vorangehenden Ansprüche, wobei die Nachricht (4; 5; 50; 500) eine CAN FD-Nachricht (5; 50; 500) ist, bei welcher das vorbestimmte Bitmuster (46, 47; 46, 47, 48; 46, 47, 480) eine Umschaltung der ersten Bitrate nach einer Arbitrationsphase (451) auf eine schnellere zweite Bitrate in der Datenphase (452) beinhaltet, in welcher Nutzdaten der Nachricht (5; 50; 500) umfasst sind, und/oder bei welcher das vorbestimmte Bitmuster (46, 47) eine Umschaltung der zweiten Bitrate nach einem Acknowledgement auf die langsamere erste Bitrate für die Arbitrationsphase (451) beinhaltet.

9. Teilnehmerstation (20; 30) nach Anspruch 8, wobei das vorbestimmte Bitmuster (46, 47, 48; 46, 47, 480) das BRS-Bit einer CAN FD-Nachricht (5; 50; 500) als Umschaltbit zwischen der ersten und zweiten Bitrate aufweist.

10. Teilnehmerstation (20; 30) nach einem der vorangehenden Ansprüche, zudem mit einer Sende-/Empfangseinrichtung (22; 32) zur Synchronisation auf eine Flanke (49) in dem vorbestimmten Bitmuster (46, 47; 46, 47, 48; 46, 47, 480) einer Nachricht (5; 50; 500) am Ende oder Anfang einer Arbitrationsphase (451, 453).

11. Teilnehmerstation (20; 30) nach einem der vorangehenden Ansprüche, wobei die Sende-/Empfangseinrichtung (22; 32) ausgestaltet ist, die Daten mit der zweiten Bitrate mit einem anderen Bus-Pegel auf die Busleitung (3) zu senden als die Daten mit der ersten Bitrate.

12. Bussystem (1), mit
einer parallelen Busleitung (3), und
mindestens zwei Teilnehmerstationen (10; 20; 30), welche über die Busleitung (3) derart miteinander verbunden sind, dass sie miteinander kommunizieren können,
wobei mindestens eine der mindestens zwei Teilnehmerstationen (10; 20; 30) eine Teilnehmerstation (20; 30) nach einem der vorangehenden Ansprüche ist.

13. Verfahren zum Senden einer Nachricht mit unterschiedlichen Bitraten in einem Bussystem (1), wobei das Verfahren den Schritt aufweist:
Erstellen, mit einer Kommunikationssteuereinrichtung (21; 31) einer Teilnehmerstation (20; 30) des Bussystems (1), einer Nachricht (4; 5; 50; 500) für mindestens eine weitere Teilnehmerstation (20; 30) des Bussystems (1),
bei welchem zumindest zeitweise ein exklusiver, kollisionsfreier Zugriff einer Teilnehmerstation (10, 20, 30) auf eine Busleitung (3) des Bussystems (1) gewährleistet ist,
wobei die Kommunikationssteuereinrichtung (21; 31) in der Nachricht (4; 5; 50; 500) eine erste Phase (451; 452) vorsieht, die mit einer ersten Bitrate zu senden ist, und eine zweite Phase (452; 453) vorsieht, die mit einer zweiten Bitrate zu senden ist, die schneller oder langsamer als die erste Bitrate ist, wobei die Kommunikationssteuereinrichtung (21; 31) in der Nachricht (5; 50; 500) zwischen der ersten und zweiten Phase (451, 452; 452, 453) ein vorbestimmtes Bitmuster (46, 47; 46, 47, 48; 46, 47, 480) für eine Bitraten-Umschaltung zwischen der ersten und zweiten Bitrate vorsieht, **dadurch gekennzeichnet, dass**
das vorbestimmte Bitmuster (46, 47; 46, 47, 48; 46, 47, 480) sowohl vor als auch nach der Bitraten-Umschaltung eine Flanke (49) zur Synchronisation aufweist, mit Hilfe welcher sich die mindestens eine weitere Teilnehmerstation (20; 30) als Empfänger auf die Teilnehmerstation (20; 30) als Sender synchronisieren kann.

## Claims

1. Subscriber station (20; 30) for a bus system (1), with a communication control device (21; 31) for creating a message (4; 5; 50; 500) for at least one other subscriber station (20; 30) of the bus system (1), in which exclusive, collision-free access by a subscriber station (10, 20, 30) to a bus line (3) of the bus system (1) is guaranteed at least temporarily,
wherein the communication control device (21; 31) is configured to provide in the message (4; 5; 50; 500) a first phase (451; 452) to be sent at a first bit rate and a second phase (452; 453) to be sent at a second bit rate, which is faster or slower than the first bit rate,
wherein the communication control device (21; 31) is configured to provide in the message (5; 50; 500), between the first and second phases (451, 452; 452, 453), a predetermined bit pattern (46, 47; 46, 47, 48; 46, 47, 480) for a bit rate changeover between the first and second bit rates, **characterized in that** the predetermined bit pattern (46, 47; 46, 47, 48; 46, 47, 480) has an edge (49) for synchronization both before and after the bit rate changeover, with the aid of which edge the at least one other subscriber station (20; 30), as receiver, can synchronize to the subscriber station (20; 30) as sender.

2. Subscriber station (20; 30) according to Claim 1, wherein the subscriber station as receiver of a message synchronizes to the sending subscriber station if the received message contains, between the first and second phases, a predetermined bit pattern for a bit rate changeover between the first and second bit rates, wherein the predetermined bit pattern has an edge for synchronization both before and after the bit rate changeover.

3. Subscriber station (20; 30) according to Claim 1 or 2, wherein at least the edge (49) after the bit rate changeover is an edge for hard synchronization.

4. Subscriber station (20; 30) according to one of the preceding claims, wherein the edges (49) for synchronization are edges from recessive to dominant, so that the predetermined bit pattern (46, 47) is 1010 if recessive = 1 and dominant = 0.

5. Subscriber station (20; 30) according to one of the preceding claims, wherein the communication control device (21; 31) is configured to provide in the message (50; 500) a changeover bit U, the value of which decides whether the first bit rate is to be changed over to the second bit rate, and wherein the second bit rate is faster than the first bit rate.

6. Subscriber station (20;30) according to Claim 5, wherein the predetermined bit pattern (46, 47, 48) is 10U10 if recessive = 1 and dominant = 0.

7. Subscriber station (20; 30) according to Claim 5, wherein the communication control device (21; 31) is configured to set the changeover bit U to recessive or 1 in order to signal that there is to be a changeover from the first bit rate to the second bit rate in the message (50; 500), and to set the predetermined bit pattern (46, 47, 480) as 10U0 if recessive = 1 and dominant = 0.

8. Subscriber station (20; 30) according to one of the preceding claims, wherein the message (4; 5; 50; 500) is a CAN FD message (5; 50; 500) in which the predetermined bit pattern (46, 47; 46, 47, 48; 46, 47, 480) includes a changeover from the first bit rate after an arbitration phase (451) to a faster, second bit rate in the data phase (452), in which user data of the message (5; 50; 500) are included, and/or in which the predetermined bit pattern (46, 47) includes a changeover from the second bit rate after an acknowledgment to the slower, first bit rate for the arbitration phase (451).

9. Subscriber station (20; 30) according to Claim 8, wherein the predetermined bit pattern (46, 47, 48; 46, 47, 480) has the BRS bit of a CAN FD message (5; 50; 500) as changeover bit between the first and second bit rates.

10. Subscriber station (20; 30) according to one of the preceding claims, additionally having a sender/receiver device (22; 32) for synchronization to an edge (49) in the predetermined bit pattern (46, 47; 46, 47, 48; 46, 47, 480) of a message (5; 50; 500) at the end or beginning of an arbitration phase (451, 453).

11. Subscriber station (20; 30) according to one of the preceding claims, wherein the sender/receiver device (22; 32) is configured to send the data at the second bit rate to the bus line (3) at a different bus level than the data at the first bit rate.

12. Bus system (1), with
a parallel bus line (3), and
at least two subscriber stations (10; 20; 30) which are connected to one another via the bus line (3) in such a way that they can communicate with one another,
wherein at least one of the at least two subscriber stations (10; 20; 30) is a subscriber station (20; 30) according to one of the preceding claims.

13. Method for sending a message at different bit rates in a bus system (1), wherein the method has the step of:
creating, with a communication control device (21; 31) of a subscriber station (20; 30) of the bus system (1), a message (4; 5; 50; 500) for at least one other subscriber station (20; 30) of the bus system (1), in which exclusive, collision-free access by a subscriber station (10, 20, 30) to a bus line (3) of the bus system (1) is guaranteed at least temporarily,
wherein the communication control device (21; 31) is configured to provide in the message (4; 5; 50; 500) a first phase (451; 452) to be sent at a first bit rate and a second phase (452; 453) to be sent at a second bit rate, which is faster or slower than the first bit rate,
wherein the communication control device (21; 31) is configured to provide in the message (5; 50; 500), between the first and second phases (451, 452; 452, 453), a predetermined bit pattern (46, 47; 46, 47, 48; 46, 47, 480) for a bit rate changeover between the first and second bit rates, **characterized in that** the predetermined bit pattern (46, 47; 46, 47, 48; 46, 47, 480) has an edge (49) for synchronization both before and after the bit rate changeover, with the aid of which edge the at least one other subscriber station (20; 30), as receiver, can synchronize to the subscriber station (20; 30) as sender.

## Revendications

1. Station périphérique (20 ; 30) pour un système de bus (1), comprenant
un dispositif de commande de communication (21 ; 31) servant à créer un message (4 ; 5 ; 50 ; 500) pour au moins une autre station périphérique (20 ; 30) du système de bus (1) dans lequel un accès exclusif sans collision d'une station périphérique (10, 20, 30) à une ligne de bus (3) du système de bus (1) est assuré au moins temporairement,
le dispositif de commande de communication (21 ; 31) étant conçu pour prévoir dans le message (4 ; 5 ; 50 ; 500) une première phase (451 ; 452) à émettre à un premier débit binaire, et pour prévoir une deuxième phase (452 ; 453) à émettre à un deuxième débit binaire qui est plus rapide ou plus lent que le premier débit binaire,
le dispositif de commande de communication (21 ; 31) étant conçu pour prévoir dans le message (5 ; 50 ; 500) entre la première et la deuxième phase (451, 452 ; 452, 453) une configuration binaire prédéterminée (46, 47 ; 46, 47, 48 ; 46, 47, 480) pour une commutation de débit binaire entre le premier et le deuxième débit binaire,
**caractérisée en ce que** la configuration binaire prédéterminée (46, 47 ; 46, 47, 48 ; 46, 47, 480) présente aussi bien avant qu'après la commutation de débit binaire un flanc (49) de synchronisation à l'aide duquel ladite au moins une autre station périphérique (20 ; 30) peut se synchroniser en tant que récepteur avec la station périphérique (20 ; 30) en tant qu'émetteur.

2. Station périphérique (20 ; 30) selon la revendication 1, dans laquelle la station périphérique en tant que récepteur d'un message se synchronise avec la station périphérique émettrice si le message reçu entre la première et la deuxième phase contient une configuration binaire prédéterminée pour une commutation de débit binaire entre le premier et le deuxième débit binaire, la configuration binaire prédéterminée présentant un flanc de synchronisation aussi bien avant qu'après la commutation de débit binaire.

3. Station périphérique (20 ; 30) selon la revendication 1 ou 2, dans laquelle au moins le flanc (49) après la commutation de débit binaire est un flanc de synchronisation matérielle.

4. Station périphérique (20 ; 30) selon l'une quelconque des revendications précédentes, dans laquelle les flancs (49) de synchronisation sont des flancs allant de récessif à dominant de sorte que la configuration binaire prédéterminée (46, 47) est 1010, si récessif = 1 et dominant = 0.

5. Station périphérique (20 ; 30) selon l'une quelconque des revendications précédentes, dans laquelle le dispositif de commande de communication (21 ; 31) est conçu pour prévoir dans le message (50 ; 500) un bit de commutation U dont la valeur décide si le premier débit binaire doit être commuté sur le deuxième débit binaire, et le deuxième débit binaire étant plus rapide que le premier débit binaire.

6. Station périphérique (20 ; 30) selon la revendication 5, dans laquelle la configuration binaire prédéterminée (46, 47, 48) est 10U10, si récessif = 1 et dominant = 0.

7. Station périphérique (20 ; 30) selon la revendication 5, dans laquelle le dispositif de commande de communication (21 ; 31) est conçu pour mettre le bit de commutation U sur récessif ou 1 afin de signaler que dans le message (50 ; 500), il faut commuter du premier débit binaire au deuxième débit binaire, et pour mettre la configuration binaire prédéterminée (46, 47, 480) sur 10U0, si récessif = 1 et dominant = 0.

8. Station périphérique (20 ; 30) selon l'une quelconque des revendications précédentes, dans laquelle le message (4 ; 5 ; 50 ; 500) est un message CAN FD (5 ; 50 ; 500) dans lequel la configuration binaire prédéterminée (46, 47 ; 46, 47, 48 ; 46, 47, 480) contient une commutation du premier débit binaire après une phase d'arbitrage (451) sur un deuxième débit binaire plus rapide dans la phase de données (452) dans laquelle des données utiles du message (5 ; 50 ; 500) sont comprises, et/ou dans lequel la configuration binaire prédéterminée (46, 47) contient une commutation du deuxième débit binaire après un accusé de réception sur le premier débit binaire plus lent pour la phase d'arbitrage (451).

9. Station périphérique (20 ; 30) selon la revendication 8, dans laquelle la configuration binaire prédéterminée (46, 47, 48 ; 46, 47, 480) présente le bit BRS d'un message CAN FD (5 ; 50 ; 500) comme bit de commutation entre le premier et le deuxième débit binaire.

10. Station périphérique (20 ; 30) selon l'une quelconque des revendications précédentes, comprenant en outre un dispositif d'émission/réception (22 ; 32) pour la synchronisation avec un flanc (49) dans la configuration binaire prédéterminée (46, 47 ; 46, 47, 48 ; 46, 47, 480) d'un message (5 ; 50 ; 500) à la fin ou au début d'une phase d'arbitrage (451, 453).

11. Station périphérique (20 ; 30) selon l'une quelconque des revendications précédentes, dans laquelle le dispositif d'émission/réception (22 ; 32) est conçu pour émettre les données ayant le deuxième débit binaire à un niveau de bus différent sur la ligne de bus (3) que les données ayant le premier débit binaire.

12. Système de bus (1), comprenant
une ligne de bus parallèle (3), et
au moins deux stations périphériques (10 ; 20 ; 30) qui sont reliées l'une à l'autre par la ligne de bus (3) de telle sorte qu'elles peuvent communiquer l'une avec l'autre,
au moins l'une des au moins deux stations périphériques (10 ; 20 ; 30) étant une station périphérique (20 ; 30) selon l'une quelconque des revendications précédentes.

13. Procédé permettant d'émettre un message à différents débits binaires dans un système de bus (1), le procédé présentant l'étape consistant à :
créer, par un dispositif de commande de communication (21 ; 31) d'une station périphérique (20 ; 30) du système de bus (1), un message (4 ; 5 ; 50 ; 500) pour au moins une autre station périphérique (20 ; 30) du système de bus (1), dans lequel un accès exclusif sans collision d'une station périphérique (10, 20, 30) à une ligne de bus (3) du système de bus (1) est assuré au moins temporairement,
le dispositif de commande de communication (21 ; 31) prévoyant dans le message (4 ; 5 ; 50 ; 500) une première phase (451 ; 452) à émettre à un premier débit binaire, et prévoyant une deuxième phase (452 ; 453) à émettre à un deuxième débit binaire qui est plus rapide ou plus lent que le premier débit binaire, le dispositif de commande de communication (21 ; 31) prévoyant dans le message (5 ; 50 ; 500) entre la première et la deuxième phase (451, 452 ; 452, 453) une configuration binaire prédéterminée (46, 47 ; 46, 47, 48 ; 46, 47, 480) pour une commutation de débit binaire entre le premier et le deuxième débit binaire,
**caractérisé en ce que** la configuration binaire prédéterminée (46, 47 ; 46, 47, 48 ; 46, 47, 480) présente aussi bien avant qu'après la commutation de débit binaire un flanc (49) de synchronisation à l'aide duquel ladite au moins une autre station périphérique (20 ; 30) en tant que récepteur peut se synchroniser avec la station périphérique (20 ; 30) en tant qu'émetteur.
